# EUROPÄISCHE PATENTSCHRIFT

(11) **EP 2 685 082 B1**
(45) Veröffentlichungstag und Bekanntmachung des Hinweises auf die Patenterteilung: **16.08.2017**
(21) Anmeldenummer: 13000728.9
(22) Anmeldetag: 13.02.2013
(51) Int. Cl.: F02M 37/10, B60K 15/03

(54) **Tankanlage mit einer Saugstrahlpumpe**
Tank system with an ejector pump
Installation de réservoir avec une pompe à jet aspirant

(30) Priorität: 13.07.2012 DE 102012013913
(43) Veröffentlichungstag der Anmeldung: 15.01.2014
(60) Teilanmeldung: 17171307.6
(73) Patentinhaber: MAN Truck & Bus AG, 80995 München (DE)
(72) Erfinder: Albertshofer, Günter, 81929 München (DE); Marx, Stefan, 82290 Landsberied (DE); Zimmer, Michael, 80687 München (DE)
(74) Vertreter: v. Bezold & Partner Patentanwälte - PartG mbB

(56) Entgegenhaltungen:
- WO-A1-2010/064972
- WO-A1-2010/068149
- DE-C1- 4 400 958
- GB-A- 2 284 581

## Beschreibung

Die Erfindung betrifft eine Tankanlage für ein Kraftfahrzeug mit einem Verbrennungsmotor, insbesondere für ein Nutzfahrzeug (z.B. Lastkraftwagen, Omnibus) mit einem Dieselmotor.

Herkömmliche Tankanlagen für Lastkraftwagen weisen oftmals einen Haupttank und einen Zusatztank auf, wobei eine motorische Kraftstoffpumpe den Dieselkraftstoff aus dem Haupttank entnimmt und zu dem Dieselmotor des Lastkraftwagens fördert. Der Zusatztank ist hierbei durch eine Verbindungsleitung mit dem Haupttank verbunden, wobei diese Verbindungsleitung unterhalb des Rahmens des Lastkraftwagens verläuft und deshalb stets kraftstoffgefüllt ist. Dadurch stellt die Verbindungsleitung sicher, dass die Füllstände in dem Haupttank und in dem Zusatztank stets angeglichen werden. Dieses bekannte Konzept benötigt zwar zur Entnahme des Dieselkraftstoffs aus dem Zusatztank keine separate Kraftstoffpumpe, jedoch ist die Führung der Verbindungsleitung unterhalb des Rahmens des Lastkraftwagens mit Nachteilen verbunden.

Weiterhin ist es beispielsweise aus DE 10 2010 061 813 A1 grundsätzlich bekannt, als Kraftstoffpumpe eine sogenannte Saugstrahlpumpe einzusetzen, um den Kraftstoff aus dem Kraftstofftank zu fördern. Hierbei weist der Kraftstofftank in der Regel zusätzlich einen sogenannten Tankgeber auf, der den Füllstand in dem Kraftstofftank misst. Die Saugstrahlpumpe bildet also neben dem Tankgeber ein zusätzliches Bauteil, was relativ aufwändig ist.

Aus WO 2010/068149 A1 ist eine Tankanlage für ein Kraftfahrzeug bekannt, wobei die Tankanlage einen Haupttank und einen Zusatztank aufweist. Der Kraftstoff wird hierbei mittels einer Saugstrahlpumpe aus dem Zusatztank in den Haupttank gefördert. In dem Haupttank wird der Füllstand dabei von einem Tankgeber gemessen. Auch hierbei bilden die Saugstrahlpumpe und der Tankgeber also getrennte Bauteile, was relativ aufwändig ist.

Der Erfindung liegt deshalb die Aufgabe zugrunde, eine entsprechend verbesserte Tankanlage mit einer Saugstrahlpumpe zur Kraftstoffentnahme zu schaffen.

Diese Aufgabe wird durch eine erfindungsgemäße Tankanlage gemäß dem Hauptanspruch gelöst.

Zum einen umfasst die Erfindung die technische Lehre, die zur Kraftstoffentnahme aus dem Kraftstofftank dienende Saugstrahlpumpe in den ohnehin vorhandenen Tankgeber zu integrieren, wodurch ein multifunktionales Bauteil geschaffen wird, das sowohl zur Kraftstoffentnahme als auch zur Messung des Füllstands dient.

Zum anderen umfasst die Erfindung aber auch die technische Lehre, die an sich bekannte Saugstrahlpumpe nicht oder zumindest nicht nur zur Kraftstoffentnahme aus dem Haupttank der Tankanlage einzusetzen, sondern auch bei dem Zusatztank eine Saugstrahlpumpe einzusetzen, um den Kraftstoff aus dem Zusatztank zu entnehmen und zu dem Haupttank zu fördern. Dies bietet den Vorteil, dass die Verbindungsleitung zwischen dem Zusatztank und dem Haupttank nicht unterhalb des Rahmens des Lastkraftwagens oder des Omnibus geführt werden muss, um eine stets kraftstoffgefüllte Verbindungsleitung zu gewährleisten. Vielmehr ermöglicht die aktive Befüllung der Verbindungsleitung zwischen dem Zusatztank und dem Haupttank durch die Saugstrahlpumpe eine Verlegung des Verbindungstanks ohne prinzipbedingte Beschränkungen, also auch beispielsweise oberhalb eines Querträgers des Rahmens des Nutzfahrzeugs.

In einem bevorzugten Ausführungsbeispiel weist die Tankanlage eine Vorlaufleitung auf, die zwischen dem Haupttank und dem Verbrennungsmotor (z.B. Dieselmotor) verläuft, um den Verbrennungsmotor mit dem Kraftstoff (z.B. Dieselkraftstoff) aus dem Haupttank zu versorgen. Darüber hinaus weist die Tankanlage vorzugsweise eine Rücklaufleitung auf, die von dem Verbrennungsmotor ausgeht und zur Rückführung von nicht verbrauchtem Kraftstoff dient. Weiterhin verfügt die Tankanlage vorzugsweise über eine Verbindungsleitung zwischen dem Zusatztank und dem Haupttank, um den Kraftstoff aus dem Zusatztank in den Haupttank zu leiten. Die Saugstrahlpumpe weist hierbei einen Pumpeneinlass auf, um den Kraftstoff aus dem Zusatztank anzusaugen, weshalb der Pumpeneinlass der Saugstrahlpumpe mit dem Zusatztank verbunden ist, insbesondere über eine Steigleitung in dem Zusatztank. Ferner weist die Saugstrahlpumpe einen Pumpenauslass auf, um den geförderten Kraftstoff auszugeben, wobei der Pumpenauslass der Saugstrahlpumpe in die Verbindungsleitung zu dem Haupttank mündet. Schließlich weist die Saugstrahlpumpe auch einen Treibmitteleinlass auf, um ein Treibmittel zuzuführen, damit die Saugstrahlpumpe einen entsprechenden Ansaugdruck erzeugen kann, wobei die von dem Verbrennungsmotor kommende Rückführleitung in den Treibmitteleinlass mündet. Bei der erfindungsgemäßen Tankanlage wird die Saugstrahlpumpe also vorzugsweise von dem zurückgeführten Kraftstoff angetrieben.

Der erfindungsgemäße Einsatz der Saugstrahlpumpe zur Kraftstoffentnahme aus dem Zusatztank ermöglicht vorteilhaft - wie bereits vorstehend kurz erwähnt wurde - einen nahezu beliebigen Verlauf der Verbindungsleitung zwischen dem Zusatztank und dem Haupttank.

Vorzugsweise verläuft die Verbindungsleitung hierbei oberhalb des Kraftstofftanks und/oder oberhalb des Zusatztanks. Bei einem Kraftfahrzeug (z.B. Lastkraftwagen) mit einem tragenden Rahmen (z.B. Leiterrahmen) mit mindestens einem Querträger kann die Verbindungsleitung zwischen dem Zusatztank und dem Haupttank vorteilhaft über oder unter dem Querträger verlaufen.

Es wurde bereits vorstehend erwähnt, dass die Erfindung die technische Lehre umfasst, die Saugstrahlpumpe in den Tankgeber zu integrieren, wodurch ein multifunktionales Bauteil geschaffen wird, das sowohl eine Kraftstoffentnahme als auch eine Füllstandsmessung ermöglicht. Im Rahmen der Erfindung kann zusätzlich noch eine Steigleitung in den Tankgeber integriert werden, wobei die Steigleitung im montierten Zustand von oben nach unten in den Kraftstofftank hineinragt, um den Kraftstoff aus dem Kraftstofftank zu entnehmen. Der im Rahmen der Erfindung verwendete Begriff einer baulichen Integration bedeutet vorzugsweise, dass die Steigleitung oder das sonstige weitere Bauteil fest mit dem Tankgeber verbunden ist und ein einheitliches Modul bildet. Darüber hinaus besteht im Rahmen der Erfindung auch die Möglichkeit, dass zusätzlich ein Füllstandssensor in den Tankgeber integriert ist, der den Füllstand des Kraftstoffs in dem Kraftstoffbehälter misst. Weiterhin kann auch die Auswertungselektronik für den Füllstandssensor in den Tankgeber integriert werden, wobei die Auswertungselektronik eingangsseitig mit dem Füllstandssensor verbunden ist und ausgangsseitig ein Ausgangssignal ausgibt, das den Füllstand des Kraftstoffs in dem Kraftstoffbehälter wiedergibt. Schließlich besteht auch die Möglichkeit, dass ein Lüftungsventil zur Entlüftung oder Belüftung des Kraftstoffbehälters in den Tankgeber integriert wird.

Bei dem vorstehend beschriebenen Tankgeber mit einer integrierten Saugstrahlpumpe sind der Pumpeneinlass, der Pumpenauslass und der Treibmitteleinlass an dem Tankgeber vorzugsweise jeweils als Steckanschlüsse ausgebildet, um einen einfachen Anschluss der jeweiligen Leitungen zu ermöglichen.

Ferner ist zu erwähnen, dass die Steigleitung, die Steckanschlüsse und die Saugstrahlpumpe vorzugsweise aus Kunststoff bestehen, was eine einfache und kostengünstige Fertigung ermöglicht.

Darüber hinaus ist noch zu erwähnen, dass die Kraftstoffförderung aus dem Zusatztank vorzugsweise ausschließlich durch die Saugstrahlpumpe ohne eine zusätzliche motorgetriebene Kraftstoffpumpe erfolgt.

Die vorstehend beschriebene erfindungsgemäße Integration der Saugstrahlpumpe in den Tankgeber erfordert typischerweise eine besondere konstruktive Anpassung der Saugstrahlpumpe. Die erfindungsgemäße Saugstrahlpumpe ist deshalb vorzugsweise so ausgebildet, dass der Treibmitteleinlass und der Pumpenauslass in einer gemeinsamen Anschlussebene nebeneinander angeordnet sind und mit ihren freien Enden in die selbe Richtung weisen. Der Pumpeneinlass ist dagegen vorzugsweise rechtwinklig zu der vorstehend erwähnten Anschlussebene des Treibmitteleinlasses und des Pumpenauslasses ausgerichtet, um einen einfachen Anschluss an die Steigleitung zu ermöglichen. Darüber hinaus ist zu erwähnen, dass die Saugstrahlpumpe einen Düsenabschnitt aufweist, um den erforderlichen Ansaugdruck zu erzeugen, wobei der Pumpeneinlass über einen rechtwinkligen Krümmer und einen anschließenden U-förmigen Krümmer mit dem Düsenabschnitt verbunden ist. Der Treibmitteleinlass ist dagegen bei der erfindungsgemäßen Saugstrahlpumpe vorzugsweise über einen rechtwinkligen Krümmer mit dem Düsenabschnitt verbunden.

Ferner ist zu erwähnen, dass die Erfindung nicht nur Schutz beansprucht für die vorstehend beschriebene erfindungsgemäße Tankanlage. Vielmehr beansprucht die Erfindung auch Schutz für ein Kraftfahrzeug mit einer derartigen erfindungsgemäß ausgebildeten Tankanlage. Bei diesem Kraftfahrzeug handelt es sich vorzugsweise um ein Nutzfahrzeug, wie beispielsweise einen Lastkraftwagen (LKW) oder einen Omnibus.

Schließlich beansprucht die Erfindung auch Schutz für die neuartige Verwendung einer Saugstrahlpumpe zur Förderung von Kraftstoff aus einem Zusatztank in einen Haupttank einer Tankanlage eines Kraftfahrzeugs.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Perspektivansicht eines erfindungsgemäßen Kraftstofftanks mit einem Tankgeber mit einer integrierten Saugstrahlpumpe,
- Figur 2: eine Querschnittsansicht durch den Kraftstofftank gemäß Figur 1,
- Figur 3: eine Perspektivansicht des Tankgebers aus den Figuren 1 und 2,
- Figur 4: eine Perspektivansicht der Saugstrahlpumpe in dem Tankgeber gemäß Figur 3,
- Figur 5: eine Querschnittsansicht durch die Saugstrahlpumpe gemäß Figur 4,
- Figur 6: eine Prinzipdarstellung einer erfindungsgemäßen Tankanlage mit einem Haupttank und einem Zusatztank, wobei der Kraftstoff mittels einer Saugstrahlpumpe aus dem Zusatztank zu dem Haupttank gefördert wird, sowie
- Figur 7: eine Abwandlung des Ausführungsbeispiels gemäß Figur 6.

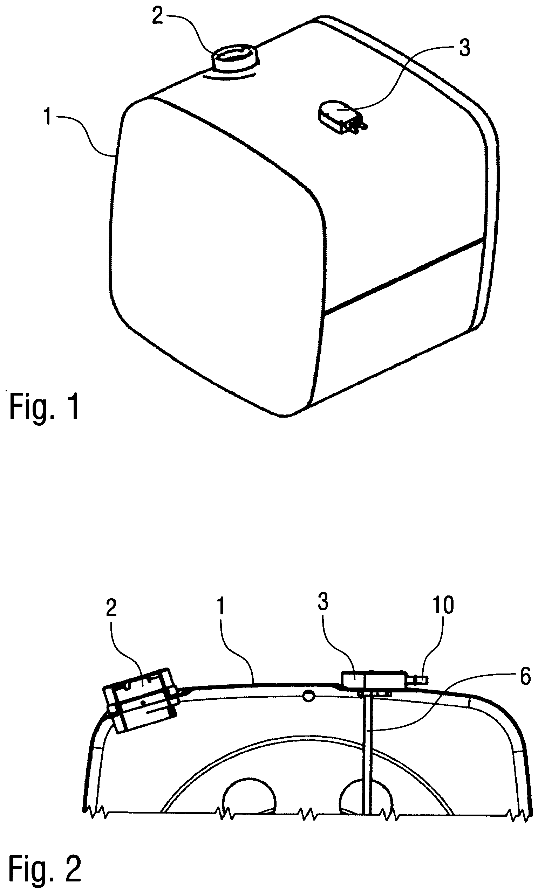

Die Figuren 1 und 2 zeigen einen Kraftstofftank 1 zur Aufnahme von Kraftstoff, wobei der Kraftstofftank 1 als Haupttank oder als Zusatztank in einem Nutzfahrzeug, z.B. Lastkraftwagen, Omnibus) eingesetzt werden kann.

An seiner Oberseite weist der Kraftstofftank 1 einen verschließbaren Einfüllstutzen 2 auf, über den der Kraftstofftank 1 mit dem jeweiligen Kraftstoff (z.B. Dieselkraftstoff) befüllt werden kann.

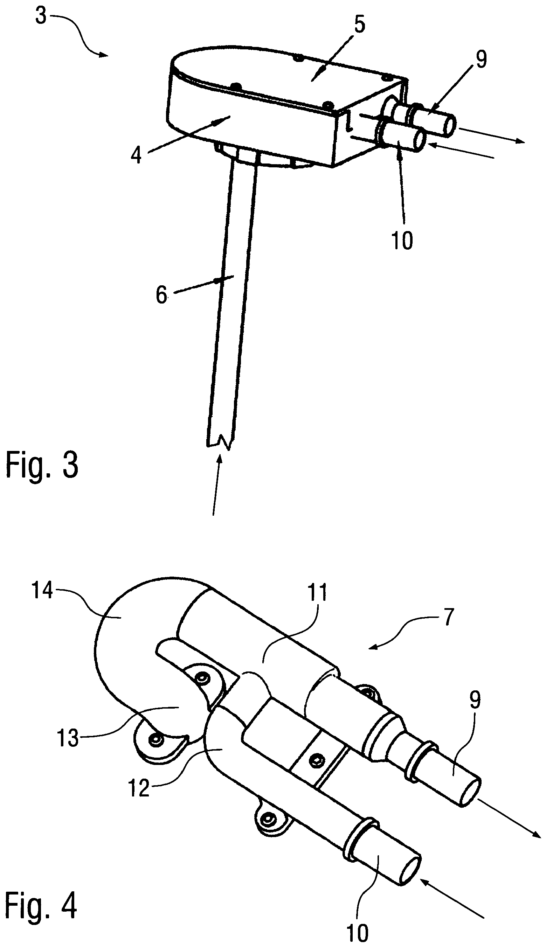

Darüber hinaus weist der Kraftstofftank 1 an seiner Oberseite eine Entnahmeeinheit 3 auf, die in Figur 3 in einer Perspektivansicht dargestellt ist und verschiedene Funktionen hat.

Zum einen kann die Entnahmeeinheit 3 eine Füllstandsmessung in dem Kraftstofftank 1 mittels eines Füllstandssensors ermöglichen, der in den Figuren 1 bis 5 zur Vereinfachung nicht dargestellt ist. Die Entnahmeeinheit 3 weist hierzu ein Gehäuse auf, das aus einem Gehäuseunterteil 4 und einem Gehäusedeckel 5 besteht, wobei der Gehäusedeckel 5 auf das Gehäuseunterteil 4 aufgesetzt und mit dem Gehäuseunterteil 4 verschraubt ist. In diesem Gehäuse befindet sich eine Auswerteelektronik, um das Ausgangssignal des Füllstandssensors auszuwerten und ein entsprechendes elektrisches Ausgangssignal zu erzeugen, das von der Bordelektronik des Nutzfahrzeugs ausgewertet werden kann.

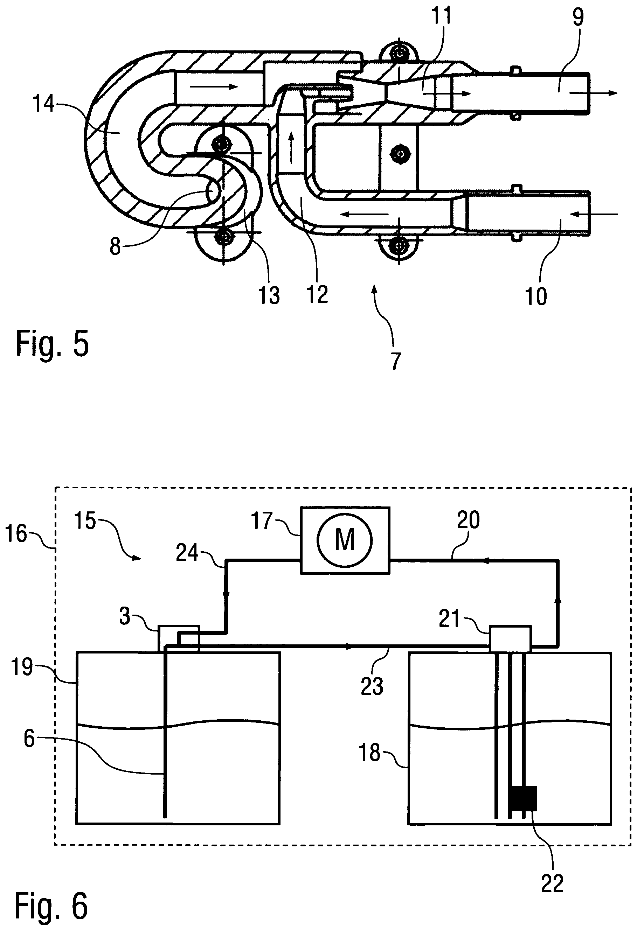

Zum anderen ermöglicht die multifunktionale Entnahmeeinheit 3 auch die Kraftstoffentnahme aus dem Kraftstofftank. Hierzu weist die Entnahmeeinheit 3 an ihrer Unterseite eine Steigleitung 6 auf, die von oben nach unten in den Kraftstofftank 1 hineinragt und dadurch eine Kraftstoffentnahme aus dem Kraftstofftank 1 ermöglicht. In dem Gehäuse der Entnahmeeinheit 3 befindet sich weiterhin eine Saugstrahlpumpe 7, die mit ihrem Pumpeneinlass 8 (vgl. Fig. 5) an die Steigleitung 6 angeschlossen ist und dadurch in der Steigleitung 6 einen entsprechenden Ansaugdruck erzeugen kann. Darüber hinaus weist die Saugstrahlpumpe 7 einen Pumpenauslass 9 auf, über den der angesaugte Treibstoff abgegeben werden kann, beispielsweise zu einem Haupttank oder direkt zu dem Verbrennungsmotor des jeweiligen Fahrzeugs. Darüber hinaus weist die Saugstrahlpumpe 7 noch einen Treibmitteleinlass 10 auf, über den ein Treibmittel (z.B. Kraftstoff von einer Kraftstoffrückleitung) zugeführt wird, damit die Saugstrahlpumpe 7 den erforderlichen Ansaugdruck erzeugen kann.

Der Pumpenauslass 9 und der Treibmitteleinlass 10 sind hierbei in einer gemeinsamen Anschlussebene nebeneinander angeordnet und mit ihren freien Enden in der selben Richtung ausgerichtet.

Der eigentliche Ansaugdruck wird in der Saugstrahlpumpe 7 in einem Düsenabschnitt 11 erzeugt, wobei der Treibmitteleinlass 10 über einen rechtwinkligen Krümmer 12 mit dem Düsenabschnitt 11 verbunden ist. Der Pumpeneinlass 8 ist dagegen über einen rechtwinkligen Krümmer 13 und einen anschließenden U-förmigen Krümmer 14 mit dem Düsenabschnitt 11 verbunden. Diese konstruktive Gestaltung der Saugstrahlpumpe 7 ermöglicht vorteilhaft eine Integration der Saugstrahlpumpe 7 in das Gehäuse des Tankgebers 3.

Figur 6 zeigt ein weiteres Ausführungsbeispiel einer erfindungsgemäßen Tankanlage 15, die in einem Nutzfahrzeug 16 (z.B. Lastkraftwagen, Omnibus) eingesetzt werden kann, um einen Dieselmotor 17 mit Dieselkraftstoff zu versorgen.

Hierzu weist die Tankanlage 15 einen Haupttank 18 und einen Zusatztank 19 auf, wobei der Haupttank 18 über eine Vorlaufleitung 20 mit dem Dieselmotor 17 verbunden ist, so dass der Dieselmotor 17 aus dem Haupttank 18 mit Dieselkraftstoff versorgt wird.

Die Kraftstoffentnahme aus dem Haupttank 18 erfolgt hierbei mittels eines Tankgebers 21 und einer Kraftstoffpumpe an dem Dieselmotor 17.

Der Zusatztank 19 ist über eine Verbindungsleitung 23 mit dem Haupttank 18 verbunden, wobei die Verbindungsleitung 23 in dem Nutzfahrzeug 16 beliebig geführt werden kann, ohne dass konstruktive Beschränkungen bestehen. Vorzugsweise wird die Verbindungsleitung 23 deshalb oberhalb oder unterhalb eines Querträgers des Rahmens des Nutzfahrzeugs 16 geführt.

Die Kraftstoffentnahme aus dem Zusatztank 19 erfolgt durch die vorstehend detailliert beschriebene Entnahmeeinheit 3, die über eine Rücklaufleitung 24 mit dem Dieselmotor 17 verbunden ist. Der von dem Dieselmotor 17 nicht verbrauchte Dieselkraftstoff wird also über die Rücklaufleitung 24 zu der Entnahmeeinheit 3 geführt und tritt dort über den Treibmitteleinlass 10 in die Saugstrahlpumpe 7 ein, wodurch die Saugstrahlpumpe 7 einen entsprechenden Ansaugdruck erzeugt.

Vorteilhaft an dieser Tankanlage 15 ist die Möglichkeit, die Verbindungsleitung 23 zwischen dem Zusatztank 19 und dem Haupttank 18 beliebig und ohne konstruktive Beschränkungen zu führen.

Abweichend von der vorstehenden Beschreibung enthält die Entnahmeeinheit 3 an dem Zusatztank 19 hierbei also die Saugstrahlpumpe 7, ermöglicht aber keine Füllstandsmessung. Der Tankgeber 21 an dem Haupttank 18 enthält dagegen in diesem Ausführungsbeispiel keine Saugstrahlpumpe, ermöglicht aber eine Füllstandsmessung mit dem Füllstandssensor.

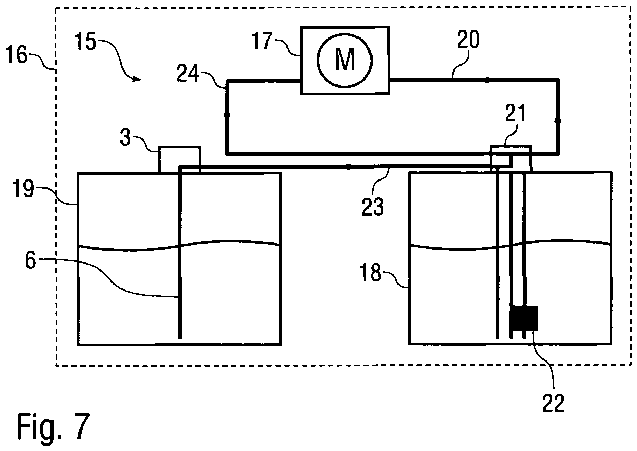

Figur 7 zeigt eine Abwandlung des Ausführungsbeispiels gemäß Figur 6, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Tankgeber 21 auch die Saugstrahlpumpe 7 enthält, wobei der Treibmitteleinlass 10 der Saugstrahlpumpe 7 von der Rückführleitung 24 gespeist wird. Die Saugstrahlpumpe 7 in der Entnahmeeinheit 21 saugt den Kraftstoff durch die Verbindungsleitung 23 aus dem Zusatztank 19 an.

Die Entnahmeeinheit 3 an dem Zusatztank 19 enthält dagegen in diesem Ausführungsbeispiel weder die Saugstrahlpumpe 7 noch den Füllstandssensor 22.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Ansprüchen. Hierbei ist auch zu erwähnen, dass die Erfindung auch Schutz beansprucht für einen entsprechenden Tankgeber bzw. eine Entnahmeeinheit mit einer integrierten Saugstrahlpumpe als einzelnes Bauteil, d.h. unabhängig von den sonstigen Bauteilen und Merkmalen der Tankanlage.

### Bezugszeichenliste:

- 1: Kraftstofftank
- 2: Einfüllstutzen
- 3: Entnahmeeinheit
- 4: Gehäuseunterteil
- 5: Gehäusedeckel
- 6: Steigleitung
- 7: Saugstrahlpumpe
- 8: Pumpeneinlass
- 9: Pumpenauslass
- 10: Treibmitteleinlass
- 11: Düsenabschnitt
- 12: Rechtwinkliger Krümmer
- 13: Rechtwinkliger Krümmer
- 14: U-förmiger Krümmer
- 15: Tankanlage
- 16: Nutzfahrzeug
- 17: Dieselmotor
- 18: Haupttank
- 19: Zusatztank
- 20: Vorlaufleitung
- 21: Tankgeber
- 22: Füllstandssensor
- 23: Verbindungsleitung
- 24: Rücklaufleitung

## Patentansprüche

1. Tankanlage (15) für ein Kraftfahrzeug (16) mit einem Verbrennungsmotor (17), insbesondere für ein Nutzfahrzeug mit einem Dieselmotor (17), mit
a) einem Kraftstofftank (18, 19) zur Aufnahme eines Kraftstoffs, insbesondere eines Dieselkraftstoffs, zum Betrieb des Verbrennungsmotors (17) und
b) einer Saugstrahlpumpe (7) zur Förderung des Kraftstoffs aus dem Kraftstofftank (18, 19), und
c) einem Tankgeber (21) zur Messung eines Füllstands des Kraftstoffs,
**dadurch gekennzeichnet,**
d) **dass** der Tankgeber (21) den Füllstand des Kraftstoffs in dem Kraftstofftank (18, 19) misst, wobei die Saugstrahlpumpe (7) baulich in den Tankgeber (21) integriert ist.

2. Tankanlage (15) nach Anspruch 1, **dadurch gekennzeichnet, dass** der Kraftstofftank (18, 19) ein Zusatztank (19) ist und die Saugstrahlpumpe (7) den Kraftstoff aus dem Zusatztank (19) in einen Haupttank (18) fördert, aus dem der Verbrennungsmotor (17) mit dem Kraftstoff versorgt wird.

3. Tankanlage (15) nach Anspruch 2, **dadurch gekennzeichnet,**
a) **dass** die Tankanlage (15) eine Vorlaufleitung (20) aufweist zur Versorgung des Verbrennungsmotors (17) mit dem Kraftstoff aus dem Haupttank (18),
b) **dass** die Tankanlage (15) eine Rücklaufleitung (24) aufweist zur Rückführung von nicht verbrauchtem Kraftstoff von dem Verbrennungsmotor (17),
c) **dass** die Tankanlage (15) eine Verbindungsleitung (23) aufweist, die den Zusatztank (19) mit dem Haupttank (18) verbindet, um den Kraftstoff aus dem Zusatztank (19) in den Haupttank (18) zu leiten,
d) **dass** die Saugstrahlpumpe (7) einen Pumpeneinlass (8) aufweist zum Ansaugen des Kraftstoffs, wobei der Pumpeneinlass (8) mit dem Zusatztank (19) verbunden ist, insbesondere mit einer Steigleitung (6) in dem Zusatztank (19),
e) **dass** die Saugstrahlpumpe (7) einen Pumpenauslass (9) aufweist zur Abgabe des geförderten Kraftstoffs, wobei der Pumpenauslass (9) in die Verbindungsleitung (23) zu dem Haupttank (18) mündet, und
f) **dass** die Saugstrahlpumpe (7) einen Treibmitteleinlass (10) aufweist zur Zuführung eines Treibmittels, wobei die von dem Verbrennungsmotor (17) kommende Rückführleitung in den Treibmitteleinlass (10) mündet.

4. Tankanlage (15) nach Anspruch 3, **dadurch gekennzeichnet,**
a) **dass** die Verbindungsleitung (23) von dem Zusatztank (19) zu dem Haupttank (18) oberhalb des Kraftstofftanks (18, 19) und des Zusatztank (19) verläuft, und/oder
b) **dass** das Kraftfahrzeug (16) einen tragenden Rahmen mit mindestens einem Querträger aufweist, insbesondere einen Leiterrahmen, wobei die Verbindungsleitung (23) von dem Zusatztank (19) zu dem Haupttank (18) oberhalb oder unterhalb von einem der Querträger verläuft.

5. Tankanlage (15) nach einem der vorhergehenden Ansprüche, **dadurch gekennzeichnet, dass** zusätzlich mindestens eine der folgenden Komponenten baulich in den Tankgeber (21) integriert ist:
a) eine Steigleitung (6), die im montierten Zustand von oben nach unten in den Kraftstofftank (18, 19) hinein ragt, um den Kraftstoff aus dem Kraftstofftank (18, 19) zu entnehmen,
b) ein Füllstandssensor (22), der den Füllstand des Kraftstoffs in dem Kraftstofftank (18, 19) misst,
c) eine Auswertungselektronik, die eingangsseitig mit dem Füllstandssensor verbunden ist und ausgangsseitig ein Ausgangssignal ausgibt, das den Füllstand des Kraftstoffs in dem Kraftstofftank (18, 19) wiedergibt,
d) ein Lüftungsventil zur Entlüftung oder Belüftung des Kraftstofftanks (18, 19).

6. Tankanlage (15) nach einem der vorhergehenden Ansprüche, **dadurch gekennzeichnet,**
a) **dass** der Tankgeber (21) für die Saugstrahlpumpe (7) einen Pumpeneinlass (8) zum Ansaugen des Kraftstoffs, einen Pumpenauslass (9) zur Abgabe des geförderten Kraftstoffs und einen Treibmitteleinlass (10) zur Zuführung eines Treibmittels aufweist, und
b) **dass** der Pumpeneinlass (8), der Pumpenauslass (9) und der Treibmitteleinlass (10) an dem Tankgeber (21) jeweils als Steckanschlüsse ausgebildet sind.

7. Tankanlage (15) nach Anspruch 5 oder 6, **dadurch gekennzeichnet, dass** die Steigleitung (6), die Steckanschlüsse und die Saugstrahlpumpe (7) aus Kunststoff bestehen.

8. Tankanlage (15) nach einem der Ansprüche 2 bis 7, **dadurch gekennzeichnet, dass** die Kraftstoffförderung aus dem Zusatztank (19) ausschließlich durch die Saugstrahlpumpe (7) ohne eine zusätzliche motorgetriebene Kraftstoffpumpe erfolgt.

9. Tankanlage (15) nach einem der vorhergehenden Ansprüche,
**dadurch gekennzeichnet,**
a) **dass** die Saugstrahlpumpe (7) einen Pumpeneinlass (8) aufweist zum Ansaugen des Kraftstoffs aus dem Kraftstofftank (18, 19),
b) **dass** die Saugstrahlpumpe (7) einen Pumpenauslass (9) aufweist zur Abgabe des geförderten Kraftstoffs,
c) **dass** die Saugstrahlpumpe (7) einen Treibmitteleinlass (10) aufweist zur Zuführung eines Treibmittels,
d) **dass** der Treibmitteleinlass (10) und der Pumpenauslass (9) in einer gemeinsamen Anschlussebene nebeneinander angeordnet sind und mit ihren freien Enden in dieselbe Richtung weisen,
e) **dass** der Pumpeneinlass (8) rechtwinklig zu der Anschlussebene des Treibmitteleinlasses (10) und des Pumpenauslasses (9) ausgerichtet ist, und/oder
f) **dass** die Saugstrahlpumpe (7) einen Düsenabschnitt (11) aufweist, wobei der Pumpeneinlass (8) über einen rechtwinkligen Krümmer (13) und einen anschließenden U-förmigen Krümmer (14) mit dem Düsenabschnitt (11) verbunden ist, und/oder
g) **dass** der Treibmitteleinlass (10) über einen rechtwinkligen Krümmer (12) mit dem Düsenabschnitt (11) verbunden ist.

10. Kraftfahrzeug (16), insbesondere Nutzfahrzeug, insbesondere Lastkraftwagen oder Omnibus, mit einer Tankanlage (15) nach einem der vorhergehenden Ansprüche.

## Claims

1. A tank system (15) for a motor vehicle (16) having an internal combustion engine (17), in particular for a commercial vehicle having a diesel engine (17), having
a) a fuel tank (18, 19) for receiving a fuel, in particular a diesel fuel, for operating the internal combustion engine (17), and
b) a suction jet pump (7) for conveying the fuel out of the fuel tank (18, 19), and
c) a tank sensor (21) for measuring a filling level of the fuel,
**characterized**
d) **in that** the tank sensor (21) measures the filling level of the fuel in the fuel tank (18, 19), the suction jet pump (7) being integrated structurally into the tank sensor (21).

2. The tank system (15) according to Claim 1, **characterized in that** the fuel tank (18, 19) is an additional tank (19), and the suction jet pump (7) conveys the fuel from the additional tank (19) into a main tank (18), from which the internal combustion engine (17) is supplied with the fuel.

3. The tank system (15) according to Claim 2, **characterized**
a) **in that** the tank system (15) has a forward feed line (20) for supplying the internal combustion engine (17) with the fuel from the main tank (18),
b) **in that** the tank system (15) has a return line (24) for returning unused fuel from the internal combustion engine (17),
c) **in that** the tank system (15) has a connecting line (23) which connects the additional tank (19) to the main tank (18), in order to conduct the fuel from the additional tank (19) into the main tank (18),
d) **in that** the suction jet pump (7) has a pump inlet (8) for sucking in the fuel, the pump inlet (8) being connected to the additional tank (19), in particular to a riser (6) in the additional tank (19),
e) **in that** the suction jet pump (7) has a pump outlet (9) for discharging the conveyed fuel, the pump outlet (9) opening into the connecting line (23) to the main tank (18), and
f) **in that** the suction jet pump (7) has a propellant inlet (10) for feeding in a propellant, the return line which comes from the internal combustion engine (17) opening into the propellant inlet (10).

4. The tank system (15) according to Claim 3, **characterized**
a) **in that** the connecting line (23) from the additional tank (19) to the main tank (18) runs above the fuel tank (18, 19) and the additional tank (19), and/or
b) **in that** the motor vehicle (16) has a load-bearing frame with at least one crossmember, in particular a ladder-type frame, the connecting line (23) from the additional tank (19) to the main tank (18) running above or below one of the crossmembers.

5. The tank system (15) according to one of the preceding claims, **characterized in that** at least one of the following components is additionally integrated structurally into the tank sensor (21):
a) a riser (6) which, in the mounted state, protrudes from above downwards into the fuel tank (18, 19), in order to remove the fuel from the fuel tank (18, 19),
b) a filling level sensor (22) which measures the filling level of the fuel in the fuel tank (18, 19),
c) an evaluation electronics means which is connected on the input side to the filling level sensor and, on the output side, outputs an output signal which represents the filling level of the fuel in the fuel tank (18, 19),
d) a venting valve for venting or aerating the fuel tank (18, 19).

6. The tank system (15) according to one of the preceding claims, **characterized**
a) **in that** the tank sensor (21) has, for the suction jet pump (7), a pump inlet (8) for sucking in the fuel, a pump outlet (9) for discharging the conveyed fuel, and a propellant inlet (10) for feeding in a propellant, and
b) **in that** the pump inlet (8), the pump outlet (9) and the propellant inlet (10) on the tank sensor (21) are configured in each case as plug-in connectors.

7. The tank system (15) according to Claim 5 or 6, **characterized in that** the riser (6), the plug-in connectors and the suction jet pump (7) consist of plastic.

8. The tank system (15) according to one of Claims 2 to 7, **characterized in that** the conveying of the fuel from the additional tank (19) takes place exclusively by way of the suction jet pump (7) without an additional engine-driven fuel pump.

9. The tank system (15) according to one of the preceding claims, **characterized**
a) **in that** the suction jet pump (7) has a pump inlet (8) for sucking in the fuel from the fuel tank (18, 19),
b) **in that** the suction jet pump (7) has a pump outlet (9) for discharging the conveyed fuel,
c) **in that** the suction jet pump (7) has a propellant inlet (10) for feeding in a propellant,
d) **in that** the propellant inlet (10) and the pump outlet (9) are arranged next to one another in a common connector plane and point in the same direction with their free ends,
e) **in that** the pump inlet (8) is oriented at a right angle with respect to the connector plane of the propellant inlet (10) and the pump outlet (9), and/or
f) **in that** the suction jet pump (7) has a nozzle section (11), the pump inlet (8) being connected to the nozzle section (11) via a right-angled elbow (13) and an adjoining U-shaped elbow (14), and/or
g) **in that** the propellant inlet (10) is connected to the nozzle section (11) via a right-angled elbow (12).

10. A motor vehicle (16), in particular a commercial vehicle, in particular a lorry or an omnibus, having a tank system (15) according to one of the preceding claims.

## Revendications

1. Installation de réservoir (15) pour un véhicule automobile (16), comprenant un moteur à combustion interne (17), en particulier pour un véhicule utilitaire, comprenant un moteur diesel (17), comprenant
a) un réservoir de carburant (18, 19) pour recevoir un carburant, en particulier un carburant diesel, pour faire fonctionner le moteur à combustion interne (17) et
b) une pompe à jet aspirant (7) pour refouler le carburant hors du réservoir de carburant (18, 19), et
c) un détecteur de réservoir (21) pour mesurer un niveau de remplissage de carburant, **caractérisée en ce que**
d) le détecteur de réservoir (21) mesure le niveau de remplissage de carburant dans le réservoir de carburant (18, 19), la pompe à jet aspirant (7) étant intégrée structurellement dans le détecteur de carburant (21).

2. Installation de réservoir (15) selon la revendication 1, **caractérisée en ce que** le réservoir de carburant (18, 19) est un réservoir supplémentaire (19) et la pompe à jet aspirant (7) refoule le carburant hors du réservoir supplémentaire (19) dans un réservoir principal (18) à partir duquel le moteur à combustion interne (17) est alimenté en carburant.

3. Installation de réservoir (15) selon la revendication 2, **caractérisée en ce que**
a) l'installation de réservoir (15) présente une conduite d'alimentation (20) pour l'alimentation du moteur à combustion interne (17) en carburant provenant du réservoir principal (18),
b) l'installation de réservoir (15) présente une conduite de retour (24) pour ramener le carburant non utilisé depuis le moteur à combustion interne (17),
c) l'installation de réservoir (15) présente une conduite de liaison (23) qui relie le réservoir supplémentaire (19) au réservoir principal (18) afin de conduire le carburant provenant du réservoir supplémentaire (19) dans le réservoir principal (18),
d) la pompe à jet aspirant (7) présente une entrée de pompe (8) pour l'aspiration du carburant, l'entrée de pompe (8) étant connectée au réservoir supplémentaire (19), en particulier au moyen d'une conduite montante (6) dans le réservoir supplémentaire (19),
e) la pompe à jet aspirant (7) présente une sortie de pompe (9) pour distribuer le carburant refoulé, la sortie de pompe (9) débouchant dans la conduite de liaison (23) allant au réservoir principal (18), et
f) la pompe à jet aspirant (7) présente une entrée d'agent propulseur (10) pour acheminer un agent propulseur, la conduite de retour provenant du moteur à combustion interne (17) débouchant dans l'entrée d'agent propulseur (10).

4. Installation de réservoir (15) selon la revendication 3, **caractérisée en ce que**
a) la conduite de liaison (23) du réservoir supplémentaire (19) au réservoir principal (18) s'étend au-dessus du réservoir de carburant (18, 19) et du réservoir supplémentaire (19), et/ou
b) le véhicule automobile (16) présente un cadre porteur avec au moins une traverse, en particulier un cadre directeur, la conduite de liaison (23) du réservoir supplémentaire (19) au réservoir principal (18) s'étendant au-dessus ou en-dessous de l'une des traverses.

5. Installation de réservoir (15) selon l'une quelconque des revendications précédentes, **caractérisée en ce qu'**en outre au moins l'un des composants suivants est intégré structurellement dans le détecteur de réservoir (21) :
a) une conduite montante (6) qui, dans l'état monté, pénètre de haut en bas dans le réservoir de carburant (18, 19), afin de prélever le carburant hors du réservoir de carburant (18, 19),
b) un capteur de niveau de remplissage (22) qui mesure le niveau de remplissage de carburant dans le réservoir de carburant (18, 19),
c) une électronique d'analyse qui est connectée du côté de l'entrée au capteur de niveau de remplissage et qui délivre au niveau de la sortie un signal de sortie qui restitue le niveau de remplissage du carburant dans le réservoir de carburant (18, 19),
d) une soupape de ventilation pour désaérer ou ventiler le réservoir de carburant (18, 19).

6. Installation de réservoir (15) selon l'une quelconque des revendications précédentes, **caractérisée en ce que**
a) le détecteur de réservoir (21) pour la pompe à jet aspirant (7) présente une entrée de pompe (8) pour aspirer le carburant, une sortie de pompe (9) pour délivrer le carburant refoulé et une entrée d'agent propulseur (10) pour acheminer un agent propulseur, et
b) l'entrée de pompe (8), la sortie de pompe (9) et l'entrée d'agent propulseur (10) sont à chaque fois réalisées sous forme de raccords enfichables au niveau du détecteur de réservoir (21).

7. Installation de réservoir (15) selon la revendication 5 ou 6, **caractérisée en ce que** la conduite montante (6), les raccords enfichables et la pompe à jet aspirant (7) se composent de plastique.

8. Installation de réservoir (15) selon l'une quelconque des revendications 2 à 7, **caractérisée en ce que** le refoulement de carburant depuis le réservoir supplémentaire (19) s'effectue exclusivement par la pompe à jet aspirant (7) sans pompe à carburant supplémentaire entraînée par un moteur.

9. Installation de réservoir (15) selon l'une quelconque des revendications précédentes, **caractérisée en ce que**
a) la pompe à jet aspirant (7) présente une entrée de pompe (8) pour aspirer le carburant hors du réservoir de carburant (18, 19),
b) la pompe à jet aspirant (7) présente une sortie de pompe (9) pour délivrer le carburant refoulé,
c) la pompe à jet aspirant (7) présente une entrée d'agent propulseur (10) pour acheminer un agent propulseur,
d) l'entrée d'agent propulseur (10) et la sortie de pompe (9) sont disposées l'une à côté de l'autre dans un plan de raccordement commun et sont orientées dans la même direction avec leurs extrémités libres,
e) l'entrée de pompe (8) est orientée à angle droit par rapport au plan de raccordement de l'entrée d'agent propulseur (10) et de la sortie de pompe (9), et/ou
f) la pompe à jet aspirant (7) présente une portion de buse (11), l'entrée de pompe (8) étant connectée à la portion de buse (11) par le biais d'un collecteur à angle droit (13) et d'un collecteur s'y raccordant en forme de U (14), et/ou
g) l'entrée d'agent propulseur (10) est connectée à la portion de buse (11) par le biais d'un collecteur à angle droit (12).

10. Véhicule automobile (16), en particulier véhicule utilitaire, notamment poids-lourd ou omnibus, comprenant une installation de réservoir (15) selon l'une quelconque des revendications précédentes.
